Europäisches Patentamt

European Patent Office

Office européen des brevets

(11) Numéro de publication: **0 325 876**

**A1**

## (12) DEMANDE DE BREVET EUROPEEN

(21) Numéro de dépôt: 88403319.2

(51) Int. Cl.⁴: **B60R 9/04**

(22) Date de dépôt: **23.12.88**

(30) Priorité: **14.01.88 FR 8800376**

(43) Date de publication de la demande:
**02.08.89 Bulletin 89/31**

(84) Etats contractants désignés:
**DE GB IT**

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Andrey, Michel**
**12, Allée des Charmilles Grand-Charmont**
**F-25200 Montbéliard(FR)**

(74) Mandataire: **Moncheny, Michel et al**
**c/o Cabinet Lavoix 2 Place d'Estienne**
**d'Orves**
**F-75441 Paris Cedex 09(FR)**

(54) **Dispositif porte-bagages pour véhicule automobile.**

(57) Dispositif de fixation d'un porte-bagages pour véhicule automobile comportant au moins une béquille (35) et un support de béquille (20) situé dans une rainure longitudinale (39) du pavillon (11) du véhicule (10) et des moyens de serrage (25) en position de la béquille qui coopèrent avec le support de béquille caractérisé en ce que le support de béquille (20) comprend une glissière (21) fixée à un emplacement déterminé dans le fond de la rainure (39) et possédant à sa partie supérieure (30) une lumière longitudinale (28, 29) et au moins un organe de liaison (22) comprenant un corps (23), en butée sur l'une des extrémités de la lumière, qui fait saillie à travers celle-ci pour coopérer avec les moyens de serrage (25).

FIG.2

## DISPOSITIF PORTE-BAGAGES POUR VEHICULE AUTOMOBILE

Le dispositif de la présente invention concerne une béquille et un support de béquille pour le montage amovible d'un porte-bagages sur le pavillon d'un véhicule automobile.

On connaît des dispositifs de fixation amovibles de porte-bagages sur le pavillon d'un véhicule notamment celui décrit dans la demande de brevet allemand DE-A1 - 3 151 404.

Ce dispositif est constitué d'un moyen de fixation inamovible situé dans une rainure du pavillon et comprenant un rail de fixation disposé sur toute la longueur de cette rainure, dont la section est en U l'une des branches étant fixée sur le fond de la rainure et l'autre étant libre pour coopérer avec une béquille de porte-bagages. Celle-ci est munie à son extrémité d'une pince comportant deux mors déplaçables l'un par rapport à l'autre à l'aide d'une vis de façon que les mors pincent la branche libre du rail. Une telle solution propose un porte-bagages difficile à positionner sur le rail car l'engagement d'une pince provoque facilement le désengagement de la pince opposée.

Le rail se prolongeant le long de la rainure ne permet pas de délimiter une zone de positionnement privilégiée.

Dans le cas de porte-bagages à barres, celles-ci peuvent être trop proches provoquant une mauvaise stabilité ou trop écartées soumettant le chargement à un travail de flexion.

La charge repose sur une seule branche du rail qui travaille à la flexion c'est-à-dire là où sa résistance est la plus faible. La surface d'appui de la béquille doit être faible de façon à éviter les glissements de la béquille sur le rail puisque l'effort de serrage est inversement proportionnel à la surface d'appui, ce qui conduit à des charges concentrées.

La demande de brevet français N° 2 475 477 concerne une béquille de porte-bagages comprenant un pied qui vient se loger dans une rainure ménagée dans le pavillon d'un véhicule automobile. Cette rainure a une section en T renversé et le pied de la béquille est constitué de deux éléments entrecroisés formant un X. L'un des éléments est fixé par rapport à la béquille tandis que l'autre est déplaçable par rapport au premier de façon à augmenter l'écartement des branches inférieures du X par serrage des branches supérieures du X.

Pour le montage on introduit donc par la partie étroite de la rainure les deux éléments en position serrée et l'on écarte ensuite les branches de façon qu'elles se positionnent au fond des ailes du T. Afin qu'il n'y ait pas glissement du porte-bagages, le pied est bloqué dans un décrochement de la rainure ce qui limite les possibilités de réglage. De plus les éléments travaillent en flexion sous le poids de la charge. Quant à la surface d'appui de la béquille sur le fond de la rainure, elle est très réduite.

On connaît également la demande de brevet GB-A-2 053 111 dans laquelle il est prévu un porte-bagages comprenant deux glissières, fixées sur les côtés du pavillon d'un véhicule, dans lesquelles coulissent des écrous, et des sabots comprenant un boulon destiné à visser dans les écrous des glissières. Les sabots de chacune des glissières sont reliés entre eux par des barres transversales. Un tel porte-bagages ne présente pas toutes les garan ties de sécurité car les sabots sont retenus par rapport aux glissières uniquement par les forces de frottement induites par le serrage du boulon.

En cas de variation du couple de serrage, les sabots sont susceptibles de glisser lors des accélérations et freinages du véhicule.

De plus les glissières sont rapportées sur le pavillon ce qui implique que l'ensemble des efforts transversaux et longitudinaux dûs à la charge sont intégralement reportés sur les liaisons de la glissière avec le pavillon.

L'invention a donc pour objet un dispositif de fixation d'un porte-bagages pour véhicule automobile qui pallie ces inconvénients et qui comprend au moins une béquille et un support de béquille situés dans une rainure longitudinale du pavillon d'un véhicule et des moyens de serrage en position de la béquille qui coopèrent avec le support de béquille caractérisé en ce que le support de béquille comprend une glissière fixée à un emplacement déterminé dans le fond de la rainure et possédant à sa partie supérieure une lumière longitudinale et au moins un organe de liaison comprenant un corps en butée sur l'une des extrémités de la lumière, qui fait saillie à travers celle-ci pour coopérer avec les moyens de serrage.

L'invention va être décrite ci-dessous plus en détail à titre d'exemple et en regard des figures annexées, parmi lesquelles :

- la figure 1 représente une vue latérale d'un véhicule sur lequel se monte le dispositif selon l'invention ;

- la figure 2 représente une vue en perspective éclatée du dispositif selon l'invention ;

- la figure 3 représente une coupe partielle transversale par rapport à l'axe de déplacement du véhicule d'une béquille et d'un support de béquille suivant la ligne 3-3 ;

- la figure 4 représente une coupe partielle longitudinale par rapport à l'axe de déplacement du véhicule d'une béquille et d'un support de béquille selon l'invention ; et

- la figure 5 représente une vue en perspective d'une variante de la glissière selon l'invention.

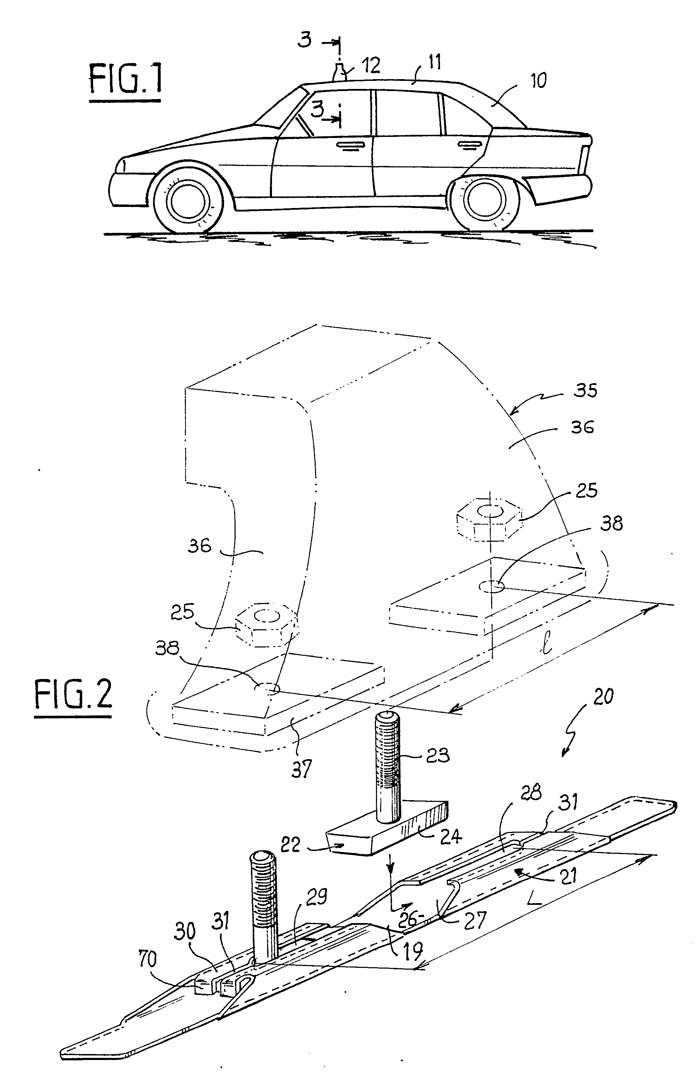

La figure 1 représente un véhicule 10 comportant un pavillon 11 sur lequel se monte un porte-bagages 12.

Le support de béquille 20 représenté sur la figure 2 est constitué d'une glissière 21 et d'un organe de liaison 22.

L'organe de liaison comprend un corps fileté 23 avec une première tête 24 parallélépipédique et une deuxième tête qui est un écrou amovible 25.

La glissière 21 est réalisée à partir d'un profilé à section transversale rectangulaire complémentaire de la section transversale de la tête 24 de l'organe de liaison.

Cette glissière possède à face supérieure une découpe 26 d'introduction et de déplacement de l'organe de liaison. Cette découpe 26 comprend deux lumières 28 et 29 et une ouverture centrale 27.

L'ouverture centrale se situe en position médiane par rapport à la glissière et ses dimensions correspondent à celles de la tête 24 de l'organe de liaison afin de permettre son introduction dans la glissière. Les parois latérales présentent un profil 19 oblique afin que dès que la tête de l'organe de liaison est introduite par l'ouverture, elle soit guidée longitudinalement, en en empêchant l'échappement latéral.

Les lumières sont découpées à partir de l'ouverture suivant l'axe longitudinal de la glissière dans sa face supérieure 30. La largeur de ces lumières est sensiblement égale au diamètre du corps de l'organe de liaison. La distance "L" qui sépare les extrémités fermées de ces lumières est fonction de la béquille qui sera mise en place ainsi que cela sera décrit plus en détail ultérieurement.

Dans l'exemple de réalisation représentée, la glissière est réalisée à partir d'une tôle par découpage et pliage, ce qui laisse subsister une fente d'extrémité 31.

La béquille 35 représentée en traits mixtes est munie de deux pieds 36 et de deux embases 37 comportant chacune un alésage 38 dont le diamètre est légèrement supérieur à celui du corps 23 de l'organe de liaison.

L'entraxe "I" des alésages 38 est inférieur à la longueur "L" séparant les extrémités fermées des lumières afin de laisser subsister un jeu de réglage pour faciliter le positionnement de la béquille.

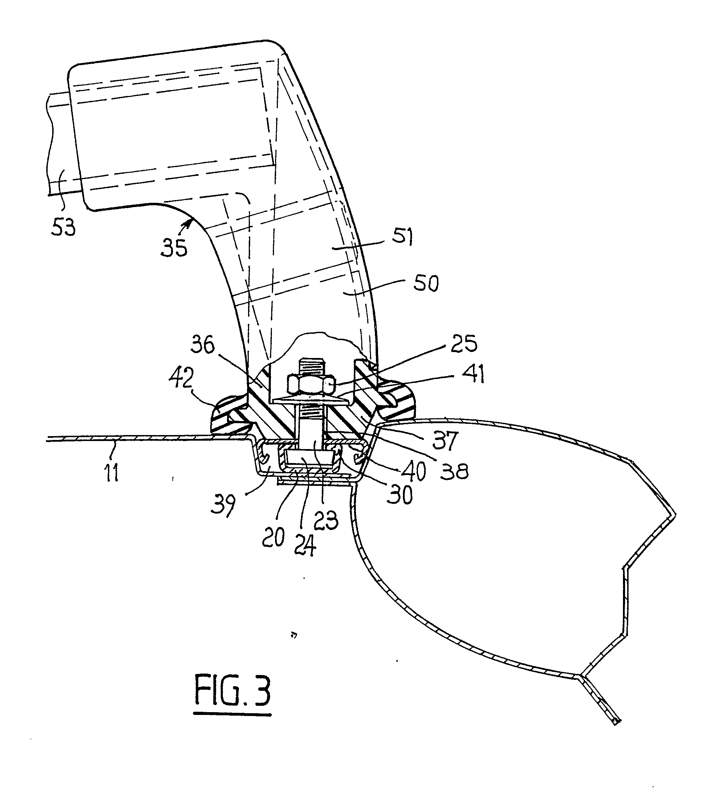

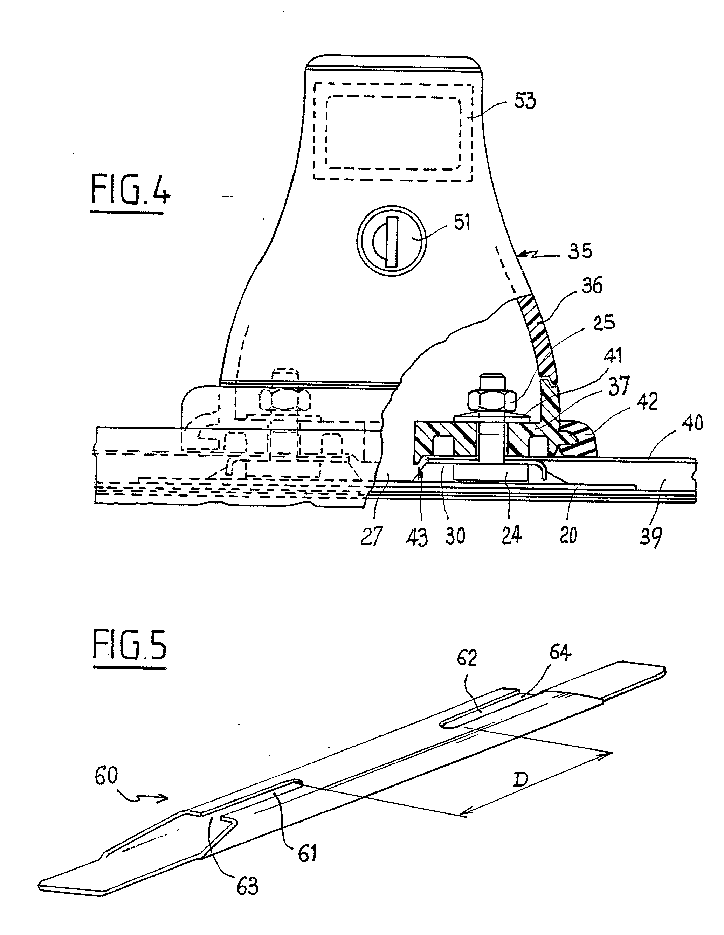

Sur les figures 3 et 4, on a représenté en coupe partielle transversale et longitudinale la béquille 35 en place sur le support de béquille 20.

La glissière est soudée sur le fond de la rainure 39 ménagée dans le pavillon 11 et les têtes des organes de liaison 24 sont en place dans la glissière. La béquille 35 est positionnée sur les organes de liaison dont les corps traversent les alésages 38 des embases 37 des pieds 36.

Un enjoliveur 40 est fixé dans la rainure 39 sur toute sa longueur et il présente des découpes similaires à celles de la glissière aux endroits de superposition.

La béquille repose sur cet enjoliveur 40 qui lui-même est en appui sur la face supérieure de la glissière. Le rôle de l'enjoliveur est donc essentiellement esthétique et il a également pour fonction d'empêcher une accumulation de corps étrangers entre la glissière et la rainure.

La béquille est solidarisée à la glissière par l'organe de liaison, et plus particulièrement par le serrage de la deuxième tête de cet organe en l'occurrence un écrou 25. Entre la face inférieure de cet écrou et la face supérieure de l'embase, on interpose une rondelle frein 41.

Chaque embase porte un joint périphérique extérieur 42 qui assure l'étanchéité avec le pavillon et l'enjoliveur.

Par ailleurs, chaque embase porte un ergot 43, représenté sur la figure 4. Cet ergot est situé en vis-à-vis des bords transversaux de l'ouverture 27. Ces ergots complètent les moyens de positionnement de la béquille sur la glissière.

Le pied 36 de béquille a un profil incliné vers l'intérieur de façon à faciliter l'accès aux écrous de serrage.

Le capot de protection 50 avec organe de verrouillage 51 est en position sur le pied de béquille. IL est amovible pour permettre l'accès aux écrous. Ce capot protège les moyens de serrage de l'eau, des chocs, de la neige, etc... Il est également une protection contre le vol.

La partie supérieure de la béquille est coudée pour recevoir de façon connue des éléments 53 du bâti du porte-bagages.

Un cache encliquetable (non représenté) est prévu pour venir masquer la glissière lorsque le porte-bagages est retiré du pavillon. Il évite la pénétration de corps étrangers dans la glissière et/ou entre l'enjoliveur et la glissière.

Dans cet exemple de réalisation la longueur "L" de l'ouverture 27 est déterminée pour un entraxe "I" donné des alésages des embases des pieds d'une béquille.

Selon une autre variante, une glissière unique se prolonge dans la rainure permettant ainsi le positionnement des béquilles avant et arrière d'un même porte-bagages sur une même glissière. Dans ce cas, les organes de liaison introduits par l'ouverture 27 sont positionnés par glissement par rapport au pavillon dans la glissière, les béquilles étant ensuite mises en place.

Selon une autre variante de l'invention, la glissière représentée figure 5 est constituée d'un profilé de section complémentaire de la section transversale de la tête de l'organe de liaison. Les lumières longitudinales 61,62 débouchent en 63, 64 aux deux extrémités de la glissière 60.

La distance "D" qui sépare les extrémités fermées est inférieure à l'entraxe "I" pour laisser subsister un jeu de réglage.

Les ergots de positionnement 43 sont placés sur chaque embase de façon à venir en appui sur les extrémités de la face supérieure de la glissière 60.

Le montage d'un porte-bagages muni d'un dispositif selon l'invention s'effectue de la façon suivante : pour chaque support de béquille le cache encliquetage est retiré, les têtes 24 des organes de liaison 22 sont introduites dans l'ouverture 27, et les organes de liaison sont déplacés par glissement jusqu'au fond des lumières 28, 29. les pieds de béquille sont mis en place en faisant correspondre les alésages des embases 37 avec les corps 23 des organes de liaison jusqu'à ce que les embases reposent sur l'enjoliveur 40 qui lui-même repose sur la face supérieure 30 de la glissière 20. Les rondelles 41 et écrous 25 sont positionnés sur les extrémités dépassantes des corps des organes de liaison, les écrous sont serrés et le capot de protection 50 est mis en place.

Ainsi dans les deux variantes à longueurs "L" ou "D" définies, les glissements de la béquille par rapport à la glissière sont interdits même en cas de desserrage partiel des écrous.

D'autre part, un tel dispositif est aisé à mettre en oeuvre car une fois une première béquille en place sur les organes de liaison d'un côté du pavillon, l'utilisateur peut ajuster la béquille opposée de l'autre côté du pavillon sans que la première béquille se désengage. Une fois les deux béquilles positionnées, le porte-bagages est stable et l'utilisateur peut mettre les rondelles, les écrous et après un réglage final, effectuer le serrage sans avoir besoin de maintenir et/ou de soutenir le porte-bagages.

Selon une autre variant de montage, l'écrou est introduit dans l'ouverture de la glissière et déplacé dans cette glissière. Afin de faciliter le positionnement de cet écrou, des pattes pliées 70 obturent la glissière, voir figure 2 et empêchent l'échappement. Dans cette variante, la béquille est mise en place de façon à aligner les alésages des embases et les écrous, les vis sont introduites dans les alésages, vissées dans les écrous et serrées.

Une telle variante peut être prévue de façon que les écrous restent à demeure dans la glissière.

## Revendications

1. Dispositif de fixation d'un porte-bagages pour véhicule automobile comportant au moins une béquille (35) et un support de béquille (20) situé dans une rainure longitudinale (39) du pavillon (11) du véhicule (10) et des moyens de serrage (25) en position de la béquille qui coopèrent avec le support de béquille caractérisé en ce que le support de béquille (20) comprend une glissière (21) fixée à un emplacement déterminé dans le fond de la rainure (39) et possédant à sa partie supérieure (30) une lumière longitudinale (28, 29) et au moins un organe de liaison (22) comprenant un corps (23), en butée sur l'une des extrémités de la lumière, qui fait saillie à travers celle-ci pour coopérer avec les moyens de serrage (25).

2. Dispositif selon la revendication 1, caractérisé en ce que l'organe de liaison (22) comprend une tête (24) qui a une section transversale complémentaire de la section transversale de la glissière (21) et qui coopère avec celle-ci, un corps (23) qui passe au travers d'un alésage (38) de la béquille (35), et un écrou de serrage (25).

3. Dispositif selon la revendication 1, caractérisé en ce que l'organe de liaison (22) comprend un écrou de serrage (25) qui a une section transversale complémentaire de la section transversale de la glissière (21) et qui coopère avec celle-ci et un corps (23) qui passe au travers d'un alésage (38) de la béquille et en ce que l'écrou vient en butée sur des pattes pliées (70) qui obturent la glissière de façon que les alésages des écrous correspondent avec les extrémités de la lumière.

4. Dispositif selon l'une des revendications 2 ou 3, caractérisé en ce que l'organe de liaison (22) comprend deux ensembles vis-écrou.

5. Dispositif selon l'une quelconque des revendications précédentes, caractérisé en ce que la glissière (21) comporte une ouverture d'introduction (27) et/ou de mise en place de la tête (24) de l'organe de liaison (22).

6. Dispositif selon les revendications 4 et 5 prises en combinaison, caractérisé en ce que l'ouverture (27) est en position médiane et interrompt la lumière (28, 29).

7. Dispositif selon la revendication 6, caractérisé en ce que la lumière est débouchante à au moins l'une de ses extrémités.

8. Dispositif selon l'une quelconque des revendications précédentes, caractérisé en ce que en ce que la béquille (35) comprend au moins un pied (36) dont la partie inférieure constitue une embase (37) alésée pour le passage du corps (23) de l'organe de liaison (22).

9. Dispositif selon la revendication 7, caractérisé en ce que la béquille comprend au moins deux pieds (36) et en ce que la distance (L,D) qui sépare les extrémités fermées des lumières est sensiblement égale à l'entraxe (1) des alésages.

10. Dispositif selon l'une quelconque des revendications 7 à 9 caractérisé en ce que chaque embase (37) porte un ergot de positionnement (43) disposé en vis-à-vis des bords de la face supérieure (30) de la glissière correspondant aux extrémités des lumières débouchantes.

11. Dispositif selon l'une quelconque des revendications précédentes, caractérisé en ce qu'un enjoliveur (40) est disposé suivant l'axe longitudinal de la rainure (39) sur toute la largeur, audessus de la glissière (21) et en ce que cet enjoliveur comporte des lumières et/ou des ouvertures correspondant à celles de la glissière.

12. Dispositif selon l'une quelconque des revendications précédentes, caractérisé en ce que l'embase (37) de chaque béquille est munie d'un joint d'étanchéité périphérique prenant appui sur le pavillon et sur l'enjoliveur.

13. Dispositif selon l'une quelconque des revendications précédentes, caractérisé en ce que la béquille est muni d'un capot (50) de protection amovible muni d'un organe de verrouillage (51) pour protéger les moyens de serrage.

FIG.1

FIG.2

FIG.3

FIG.4

53

51

35

36

25

41

37

42

40

27  43  30  24  20  39

FIG.5

60

62  64

D

61

63

<br>

Office européen
des brevets

# RAPPORT DE RECHERCHE EUROPEENNE

Numero de la demande

EP  88 40 3319

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| Y | WO-A-8 600 584  (BOTT)<br>* figure 11; page 7, ligne 21 - page 8, ligne 2 *<br>--- | 1 | B 60 R   9/04 |
| Y | DE-A-1 900 793  (WARREN FASTENER)<br>* page 3, ligne 21 - page 4, ligne 8 *<br>--- | 1 | |
| A | US-A-4 114 947  (NELSON)<br>* figures 3-5; colonne 3, lignes 17-47 *<br>--- | 2-10 | |
| A | GB-A-2 053 111  (BOTT)<br>* figures 5,8; page 2, lignes 76-103 *<br>--- | 1,3 | |
| D,A | FR-A-2 475 477  (DAIMLER-BENZ)<br>* page 2, lignes 1-7 *<br>--- | 11,12 | |
| A | FR-A-2 320 848  (BOTT)<br>* page 2, lignes 23-32; figures 3,6 *<br>--- | 11,12 | |
| A | EP-A-0 091 889  (THULE)<br>* figure 1; page 4, lignes 23-26 *<br>--- | 13 | DOMAINES TECHNIQUES RECHERCHES (Int. Cl.3) |
| A | DE-A-3 614 740  (BMW)<br>* figures 4,5 *<br>--- | 1,3 | B 60 N   1/00<br>B 60 R   9/00 |
| A | FR-A-1 084 496  (BERNEUX et al.)<br>* page 1, ligne 80 - page 2, ligne 4 *<br>----- | 4,5,7 | |

Le présent rapport a été établi pour toutes les revendications

| Lieu de la recherche | Date d'achévement de la recherche | Examinateur |
|---|---|---|
| BERLIN | 12-04-1989 | STANDRING M A |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant.

EPO FORM 1503 03.82 (P0402)